Europäisches Patentamt

European Patent Office

Office européen des brevets

(11) Veröffentlichungsnummer: **0 171 576**
**B1**

(12) **EUROPÄISCHE PATENTSCHRIFT**

(45) Veröffentlichungstag der Patentschrift:
26.10.88

(21) Anmeldenummer: 85108226.3

(22) Anmeldetag: 03.07.85

(51) Int. Cl.⁴: **B 62 D 25/20,** B 62 D 65/00, B 62 D 23/00

(54) Vormontierte Baugruppe für den Unterbau von Kraftfahrzeugen, insbesondere Personenkraftwagen, Verfahren zur Herstellung einer solchen Baugruppe und Verwendung einer solchen.

(30) Priorität: 14.08.84 DE 3429839

(43) Veröffentlichungstag der Anmeldung:
19.02.86 Patentblatt 86/8

(45) Bekanntmachung des Hinweises auf die Patenterteilung:
26.10.88 Patentblatt 88/43

(84) Benannte Vertragsstaaten:
DE FR GB IT SE

(56) Entgegenhaltungen:
DE - A - 1 480 603
DE - A - 2 057 307
DE - A - 2 923 874
DE - C - 958 361
FR - A - 852 494
GB - A - 495 254

AUTOMOTIVE ENGINEER, Band 7, Nr. 3, Juni/Juli 1982, Seite 11, Southend-on-Sea, GB; "Sandwich panelling in research vehicle"

(73) Patentinhaber: Adam Opel Aktiengesellschaft,
Bahnhofsplatz 1 Postfach 1560, D-6090 Rüsselsheim (DE)

(72) Erfinder: Köchy, Fritz, Ing. (grad.), Schlesische Strasse 24, D-6500 Mainz (DE)
Erfinder: Helmsing, Gerhard, Ing. (grad.), Am Honigbaum 6, D-6239 Eppstein (DE)
Erfinder: Neumann, Bernhard, Böhmerwaldstrasse 2, D-6090 Rüsselsheim 7 (DE)

(74) Vertreter: Elbert, Karl, Dipl.-Ing. et al, Adam Opel AG Patentabteilung Bahnhofsplatz 1 Postfach 1560, D-6090 Rüsselsheim (DE)

## Beschreibung

Die Erfindung bezieht sich auf eine vormontierte Baugruppe nach dem Oberbegriff des Patentanspruchs 1.

Bei der Herstellung von Kraftfahrzeugen besteht zunehmend die Tendenz, einzelne Teile nicht mehr separat zu montieren, sondern mehrere Teile zu vormontierten Baugruppen zusammenzufassen und diese grösseren Baueinheiten dann im Fahrzeug einzubauen. Hierdurch können Qualitätsverbeserungen und Erleichterungen der Arbeitsbedingungen und Montageoperationen erreicht werden.

Eine vormontierte Baugruppe der eingangs bezeichneten Art ist durch die DE-A 1 480 603 bekannt geworden. Gegenstand dieser Druckschrift ist eine aus Teilstücken zusammengesetzte, selbsttragende Karosserie für Kraftwagen, insbesondere Personenkraftwagen, die derart ausgeführt ist, dass ein schalenförmiges, den gesamten Boden, einschliesslich der Radkästen, der unteren Seitenwandteile, der unteren Türstrebenhälften und vordere und hintere Abschlusswände umfassendes Bodenteil, das etwa bis zur im wesentlichen waagerecht verlaufenden Gürtellinie in der mittleren Karosseriehöhe reicht, mit einem dieser ergänzenden Dachteile vereinigt wird, welches die oberen Türstrebenhälften, die Windschutzscheibenstreben mit der unteren Quereinfassung, die Heckfensterscheiben bzw. Wandteile umfasst.

Aufgabe der vorliegenden Erfindung ist es, bei einer vormontierten Baugruppe der eingangs bezeichneten Art geeignete Massnahmen zur Verbindung der Unterbaugruppe mit der Karosserie (Oberbau) zu treffen, derart, dass hierdurch die Herstellung des gesamten Kraftfahrzeuges wesentlich erleichtert, verbessert und beschleunigt werden kann.

Gemäss der Erfindung wird die Aufgabe durch die im kennzeichnenden Teil des Patentanspruchs 1 angegebenen Merkmale gelöst.

Die erfindungsgemässe Klebeverbindung fungiert vorteilhafterweise im Sinne einer Aufnahme von Toleranzen und ermöglicht dadurch eine weniger genaue Toleranzeinhaltung bei der Herstellung der Einzelteile. Ferner ist der erfindungsgemässe Klebekanal zugleich in der Lage, zur Selbstzentrierung der Karosserie, zur Abdichtung des Fahrzeug-Innenraumes, zur Isolation des Fahrzeug-Innenraumes und zur Entkopelung gegen Fahrgeräusche zu dienen.

Weitere Ausgestaltungen des gegenständlichen Teils der Erfindung sind den Patentansprüchen 3 bis 10 zu entnehmen.

Nach einem weiteren wesentlichen Merkmal der Erfindung ist ein Verfahren zur Herstellung einer derartigen vormontierten Baugruppe durch die im Patentanspruch 11 angegebenen Verfahrensschritte gekennzeichnet. Das erfindungsgemässe Verfahren ermöglicht eine einfache, übersichtliche und relativ schnelle Montage der in Rede stehenden Unterbaugruppe, unter weitgehender Vermeidung von Überkopfarbeiten.

Vorteilhafte Verwendungsmöglichkeiten der Erfindung ergeben sich des weiteren aus den Patentansprüchen 12 bis 14.

Die Erfindung ist nun anhand eines Ausführungsbeispiels in der Zeichnung veranschaulicht und nachstehend näher erläutert. Es zeigt:

Fig. 1 in perspektivischer Darstellung eine komplett vormontierte Baugruppe für den Unterbau eines Personenkraftwagens, mit oberhalb angedeuteter Karosserie,

Fig. 2 einen Boden für eine Baugruppe nach Fig. 1, in gegenüber Fig. 1 um 180° gedrehter Stellung, d.h. mit nach oben weisender Unterseite sowie in sogenannter Explosionsdarstellung die an der Unterseite des Bodens vorzumontierenden Einbauten,

Fig. 3 den Boden nach Fig. 1 und 2 in Normalposition, d.h. mit nach oben weisender Oberseite und nach unten weisender Unterseite sowie in Explosionsdarstellung ein zu montierendes Antriebsaggregat, welches zusammen mit Vorderachse und Kühler eine vormontierte Baueinheit bildet,

Fig. 4 die in Fig. 3 getrennt gezeigten Teile in Zusammenbaustellung, ferner in Explosionsdarstellung ein zu montierender kompletter Bodenbelag und ein Rücksitz einschliesslich Rückenlehne,

Fig. 5 die in Fig. 4 getrennt dargestellten Teile in Zusammenbaustellung sowie in Explosionsdarstellung zu montierende Vordersitze,

Fig. 6 eine stark schematisierte Querschnittsdarstellung einer Baugruppe für den Unterbau mit montierter Karosserie,

Fig. 7 ebenfalls noch schematisch eine gegenüber Fig. 6 etwas vergrösserte Querschnittsdarstellung und

Fig. 8 eine nochmals vergrösserte Darstellung (schematisch) der Einzelheit A in Fig. 7.

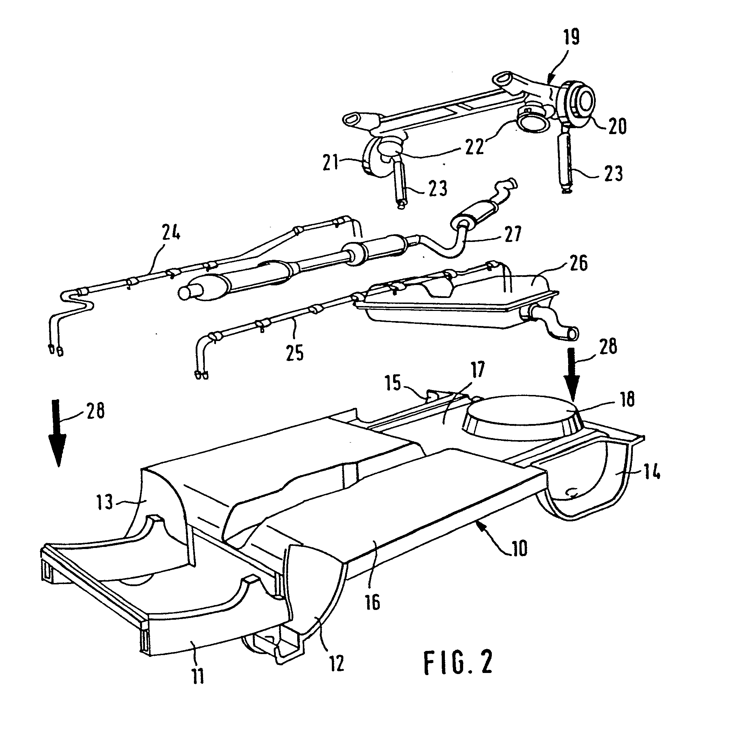

Es bezeichnet 10 einen sich im wesentlichen über die gesamte Fahrzeuglänge und -breite erstreckenden Boden als Basis für eine vormontierte Unterbaugruppe eines Personenkraftwagens, einschliesslich Vorderrahmen 11, Radkästen 12, 13 für die Vorderräder, Radkästen 14, 15 für die Hinterräder, Mittelboden 16 und Kofferraumboden 17 mit Ablagemulde 18 für ein Ersatzrad. Bei weiteren, aus Fig. 2 erkennbaren Einbauten handelt es sich um eine Hinterachse 19 mit Radtrommeln 20, 21, Federn 22 und Stossdämpfern 23, ferner Bremsleitungen 24, Kraftstoffleitungen 25, einen Kraftstofftank 26 und eine Auspuffanlage 27. Die genannten Teile werden in Pfeilrichtung 28, d.h. in Vertikalrichtung von oben nach unten, auf dem mit seiner Unterseite nach oben weisenden Boden 10 montiert.

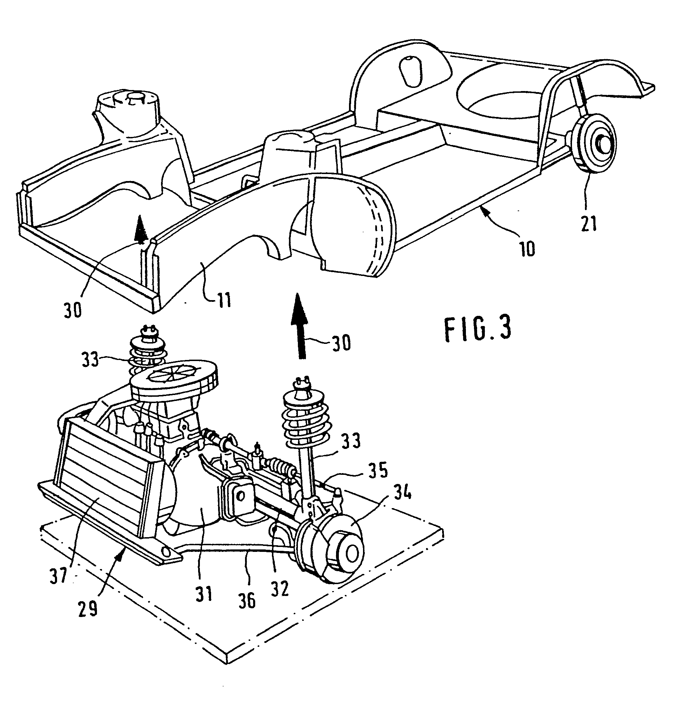

Der Boden 10 wird anschliessend zusammen mit den montierten Teilen 19–27 um 180° in seine aus Fig. 3 ersichtlichen Normalposition gedreht. In dieser Stellung erfolgt die Montage einer insgesamt mit 29 bezifferten Baueinheit in Pfeilrichtung 30, d.h. in Vertikalrichtungen von oben nach unten, zwischen den Holmen des Vorderrahmens 11. Die vormontierte Baueinheit 29 besteht im einzelnen aus einem Motor und Getriebe beinhaltenden Antriebsblock 31, einer Vorderachse 32 mit Federbeinen 33, Bremsscheiben 34, Lenkgestänge 35, Schubgestänge 36 sowie dem mit 37 bezeichneten Kühler für das Antriebsaggregat 31.

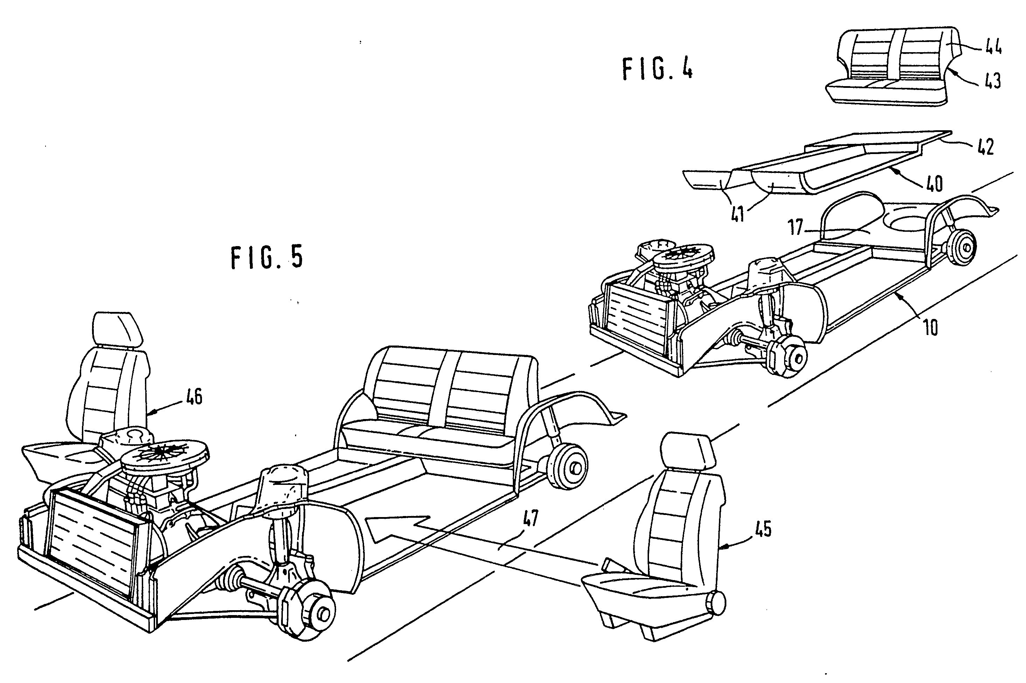

Aus Fig. 4 und 5 ist zusätzlich zu erkennen ein als Formteil ausgebildeter, vorgefertigter kompletter Bodenbelag 40, der mit seinem vorderen aufgebogenen Ende 41 den Fussraum des Cockpit-Bereichs bedeckt und mit seinem hinteren, abgesetzten Ende 42 die Abdeckung des kompletten Kofferraumbodens 17 mit einschliesst. Ein Rücksitz komplett mit Rückenlehne ist mit 43 bzw. 44 beziffert. Während die Teile 40 und 43 wiederum in Vertikalrichtung von oben nach unten montiert werden, erfolgt die Montage der als Einzelteile ausgebildeten und mit 45, 46 bezifferten Vordersitze – wie Fig. 5 zeigt – in Horizontalrichtung seitlich quer zur Fahrzeuglängsrichtung (s. Pfeil 47).

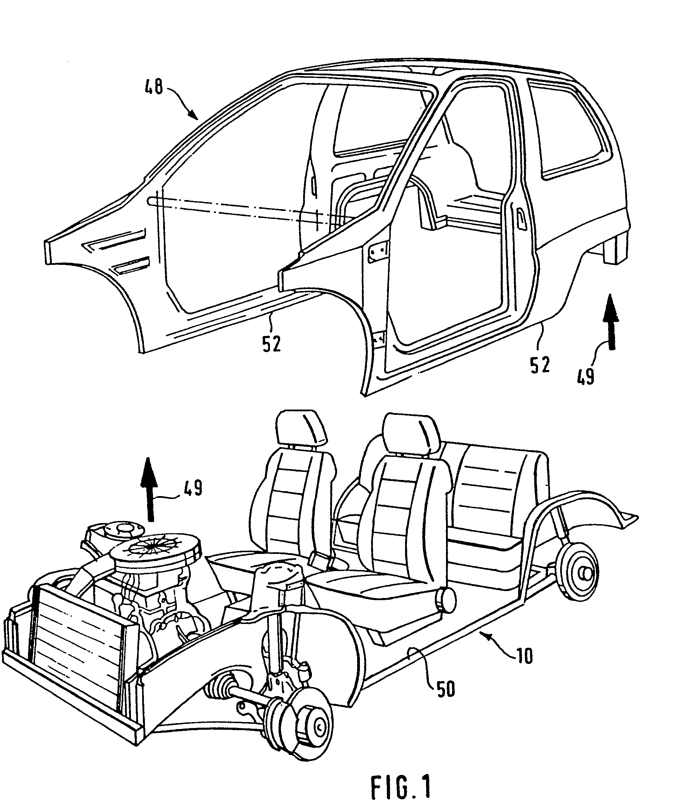

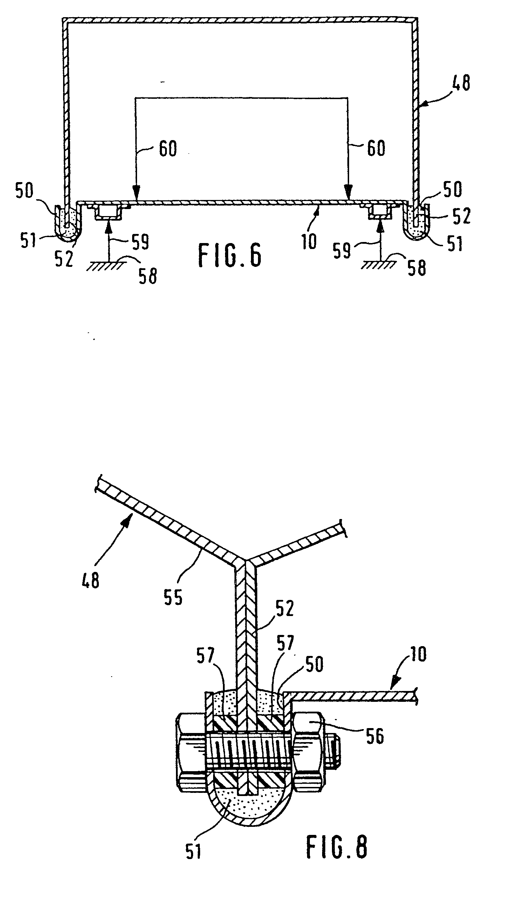

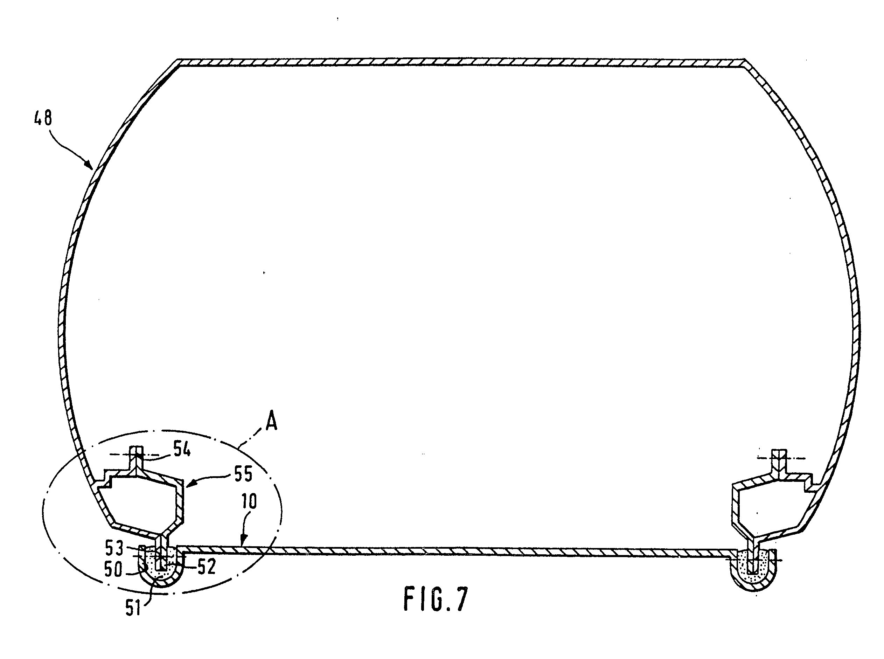

Fig. 1 zeigt nun die in den einzelnen Montagephasen nach Fig. 2–5 komplett montierte Baugruppe für den Unterbau des betreffenden Personenkraftfahrzeuges. Oberhalb der Baugruppe ist der aus Metallblech bestehende Teil einer zugeordneten PKW-Karosserie gezeigt, der insgesamt das Bezugszeichen 48 trägt. Der Zusammenbau der Unterbau-Baugruppe mit der Karosserie 48 erfolgt – wie in Fig. 1 angedeutet ist – in Pfeilrichtung 49, vertikal von unten nach oben. Um nun die Baugruppe mit der Karosserie 48 verbinden zu können, besitzt der Boden 10 der Baugruppe – an seinem Rand umlaufend – einen nach oben offenen Verbindungskanal 50 (s. hierzu auch Fig. 6–8), der mit Klebstoff 51 gefüllt werden kann. Wie Fig. 6–8 erkennen lassen, greift in der Zusammenbaustellung ein mit 52 bezeichneter vertikaler Verbindungsflansch der Karosserie 48 von oben in den Verbindungskanal 50 des Bodens 10 ein. Der Verbindungsflansch 52 wird gebildet durch zwei bei 53, 54 (Fig. 7) zu einem Hohlträger 55 verschweissten Blechen.

Aus Fig. 8 ersichtliche und dort mit 56 bezeichnete Schraubenverbindungen, von denen jeweils eine an den Ecken des Bodens 10 bzw. der Karosserie 48 vorgesehen ist, machen spezielle Spannvorrichtungen für die Kleberabbindezeit überflüssig. Im Innern des Kanals 50 – an den Schraubenverbindungsstellen 56 mit dem Karosserieverbindungsflansch 52 – sind hierbei Distanzscheiben 57 aus Gummi od. dgl. beidseitig des in den Klebstoff 51 ragenden Teils des Verbindungsflansches 52 angeordnet.

Aus Fig. 6 gehen nun im einzelnen die Kräfteverhältnisse hervor, die in Zusammenbaustellung der vormontierten Baugruppe für den Unterbau (10) mit der Karosserie 48 bei Belastung des Gesamtfahrzeuges auftreten. Die von der Fahrbahn 58 her über die Räder auf den Boden 10 der Unterbau-Baugruppe einwirkenden Kräfte sind durch Pfeile 59 veranschaulicht. Pfeile 60 kennzeichnen das von oben nach unten auf den Boden 10 wirkende Gewicht der Fahrgäste + Gepäck.

Das Gewicht der Karosserie 48 wird durch die Verbindungsflansche 52 auf den Verbindungskanal 50 des Bodens 10 übertragen. Fig. 6 und die vorstehenden Ausführungen machen deutlich, dass somit das Gewicht der Fahrgäste + Gepäck (Pfeile 60) in keiner Weise die Klebeverbindung 50, 51, 52 beansprucht.

**Patentansprüche**

1. Vormontierte Baugruppe für den Unterbau von Kraftfahrzeugen, insbesondere Personenkraftwagen, bestehend aus einem Boden (10) mit vormontierten Einbauten, wobei der Boden (10) als sich über die gesamte Fahrzeuglänge und -breite oder im wesentlichen über die gesamte Fahrzeuglänge und -breite erstreckendes, selbsttragendes Bauteil ausgebildet ist und den Vorderrahmen (11), den Kofferraumboden (17) sowie die Radkästen (12–15) mit umfasst, dadurch gekennzeichnet, dass der Boden (10) am Rand einen umlaufenden nach oben offenen mit Klebstoff (51) füllbaren Kanal (50) aufweist, der zur Aufnahme eines entsprechend umlaufenden vertikalen Verbindungsflansches (52) der Karosserie (48) dient, derart, dass der Boden (10) mit der Karosserie (48) durch Kleben verbindbar ist.

2. Vormontierte Baugruppe nach Anspruch 1, dadurch gekennzeichnet, dass der Kanal (50) zugleich zur Selbstzentrierung der Karosserie (48), zur Abdichtung des Fahrzeug-Innenraumes, zur Isolation des Fahrzeug-Innenraumes und zur Entkoppelung gegen Fahrgeräusche dient.

3. Vormontierte Baugruppe nach Anspruch 1 oder 2, mit Bodenbelag und Sitzen als vormontierte Einbauten, dadurch gekennzeichnet, dass der vormontierte Bodenbelag (40) sich über die gesamte Länge, d.h. von der Vorderkante (an der Stirnwand oder Cockpit) bis zum hinteren Fahrzeugende – d.h. den Kofferraumboden (17) einschliessend – erstreckt und dass die Rücksitze (43) einschliesslich Rückenlehnen (44) ohne oder mit Anordnung einer Rückenlehnenverstellung und mit Lager-, Befestigungs- und Rückenlehnenverstellteilen an Unterbau (10) und Radkasten (14, 15) – ebenso wie die Vordersitze (45, 46) – vormontiert sind.

4. Vormontierte Baugruppe nach Anspruch 1, 2 oder 3, gekennzeichnet durch folgende zusätzliche auf der Oberseite des Bodens (10) vormontierte Einbauten: Hintere Sicherheitsgurte, Reserverad, Wagenheber, Bordwerkzeug, Warndreieck, Verbandskasten.

5. Vormontierte Baugruppe nach Anspruch 1, 2, 3 oder 4, gekennzeichnet durch folgende zusätzliche auf der Unterseite des Bodens (10) vormontierte Einbauten: Hinterachse (19) mit Stossdämpfern (23), Vorderachse (32) mit Federbeinen (33), Motor und Getriebe (Antriebsaggregat 31), Kühler (37) mit Leitungen, Kraftstofftank (26) mit -leitungen (25), Auspuffanlage (27), Bremsleitungen (24), Abgas-Entgiftungseinrichtungen (Konverter, Hitze-Abschirmbleche), Diesel-Reinigungsfilter.

6. Vormontierte Baugruppe nach einem oder mehreren der vorstehenden Ansprüche, dadurch gekennzeichnet, dass auf dem Boden bis hin zum Wagenheck alle elektrischen Leitungen für Bremslichter, Schlussleuchten, Rückfahrscheinwerfer, Signalleuchten u. dgl. verlegt sind.

7. Vormontierte Baugruppe nach einem oder mehreren der vorstehenden Ansprüche, dadurch gekennzeichnet, dass die Mittelkonsole zwischen den Vordersitzen so ausgebildet ist, dass sie direkten Anschluss an die Armaturentafel bzw. an das Cockpit hat.

8. Vormontierte Baugruppe nach einem oder mehreren der vorstehenden Ansprüche, dadurch gekennzeichnet, dass im Bereich Stirnwand seitlich, vorderer Fussabstellbereich, Radkasten (12–15), Vorderrahmen (11) oder Kofferraumboden elektronische Komponenten vormontiert sind.

9. Vormontierte Baugruppe nach einem oder mehreren der vorstehenden Ansprüche, dadurch gekennzeichnet, dass sich das Gewicht der Vorder- und Hintersitze direkt, d.h. ohne Zwischenverbindung, auf dem Fahrwerk abstützt.

10. Vormontierte Baugruppe nach einem oder mehreren der vorstehenden Ansprüche, dadurch gekennzeichnet, dass sich die Karosserie (48) in dem nach unten geschlossenen Kanal (50) abstützt und ohne Klebung und Schraubung von dem Boden (10) getragen wird.

11. Verfahren zur Herstellung einer vormontierten Baugruppe nach einem oder mehreren der vorstehenden Ansprüche, gekennzeichnet durch folgende nacheinander vorzunehmende Verfahrensschritte:

a) Montage von Kraftstofftank (26) und -leitungen (25), Bremsleitungen (24), Auspuffanlage mit Entgiftungs- und Reinigungsanlagen sowie Hinterachse (19) mit Stossdämpfern (23) mit Handbremse und vormontiertem Anschluss an der Hinterradbremse in Vertikalrichtung von oben nach unten (Pfeil 28) auf dem mit der Unterseite nach oben weisenden Boden (10) (Fig. 2).

b) Drehen des Bodens (10) (einschliesslich der bereits montierten Einbauten (19–27)) um 180°, bis seine Oberseite nach oben bzw. seine Unterseite nach unten zeigt.

c) Das aus Motor und Getriebe bestehende Antriebsaggregat (31), welches zusammen mit der Vorderachse (32) einschliesslich Federbeinen (33) und dem Kühler (37), einschliesslich Leitungen eine vormontierte Baueinheit (29) bildet, wird in Vertikalrichtung von unten nach oben (Pfeil 30) zwischen den beiden Vorderrahmenteilen (11) des Bodens (10) montiert (Fig. 3).

d) Montage des ein vorgeformtes Bauteil bildenden Bodenbelages (40) und des Rücksitzes (43) einschliesslich Rückenlehnen (44) mit Verstellbeschlägen, in Vertikalrichtung von oben nach unten auf der Oberseite des Bodens (10) (Fig. 4).

e) Montage der beiden Vordersitze (44, 46), jeweils einschliesslich Rückenlehne und Verstellbeschlag, von der jeweiligen Seite her in Horizontalrichtung (Pfeil 47) quer zur Fahrzeug-Längsachse (Fig. 5).

12. Verwendung einer vormontierten Baugruppe nach einem oder mehreren der vorstehenden Ansprüche zur Herstellung eines Kraftfahrzeuges, insbesondere Personenkraftwagens, dadurch gekennzeichnet, dass die vormontierte Baugruppe – nach kompletter Funktionsprüfung derselben – in Vertikalrichtung mit der Karosserie (48) montiert wird, wobei der vertikale Verbindungsflansch (52) der Karosserie in den mit Klebstoff (51) gefüllten Kanal (50) am Rand des Bodens (10) eingreift (Fig. 6–8).

13. Verwendung nach Anspruch 12, dadurch gekennzeichnet, dass der Boden (10) an den Ecken des Kanals (50) mit dem in den Klebstoff (51) eingreifenden vertikalen Karosserie-Verbindungsflansch (52) zusätzlich durch Verschraubung (56) verbunden wird.

14. Verwendung nach Anspruch 13, dadurch gekennzeichnet, dass im Innern des Kanals (50) – an den Schraubverbindungsstellen (56) mit dem Karosserie-Verbindungsflansch (52) – Distanzscheiben (57) aus Gummi oder einem technisch gleichwertigen Material beidseitig des in den Klebstoff (51) ragenden Karosserie-Verbindungsflansches (52) – jeweils zwischen diesem und der Kanalwandung – angeordnet sind, derart, dass keine direkte (metallische) Berührung des Karosserie-Verbindungsflansches (52) mit dem Kanal (50) entsteht.

## Revendications

1. Groupe de construction prémonté pour la structure inférieure de véhicules automobiles, notamment de voitures de tourisme, composé d'un sol (10) avec des éléments encastrables prémontés, ledit sol (10) étant établi en partie autoportante s'étendant à toutes ou presque toutes la longueur et la largeur du véhicule et englobant le châssis avant (11), le fond (17) du coffre et les carters de roue (12–15), caractérisé par le fait que le sol (10) présente sur son bord un canal périphérique (50) ouvert à sa partie supérieure et emplissable de matière adhésive (51) qui sert à entourer un flasque de jonction (52) vertical de pourtour correspondant de la carrosserie (48) en sorte que ledit sol (10) soit assemblable par collage à cette dernière (48).

2. Groupe de construction prémonté selon la revendication 1 caractérisé par le fait que le canal (50) sert en même temps à l'autocentrage de la carrosserie (48), à l'étanchéité et l'isolation de l'intérieur du véhicule et au découplage de ce volume intérieur par rapport aux bruits du véhicule.

3. Groupe de construction prémonté selon la revendication 1 ou 2, avec plancher et sièges en éléments insérables prémontés, caractérisé par le fait que le plancher prémonté (40) s'étend à toute la longueur, c'est-à-dire de l'arête avant (sur la paroi frontale ou l'habitacle) à l'extrémité arrière, du véhicule, c'est-à-dire fond de coffre (17) compris, et que les sièges arrière (43), y inclus leurs dossiers (44), sont prémontés, tout comme les sièges avant (45, 46), avec ou sans disposition d'un réglage de dossier et avec des pièces d'assise, de fixation et de réglage de dossier, sur la structure inférieure (10) et les carters de roue (14, 15).

4. Groupe de construction prémonté selon la revendication 1, 2 ou 3 caractérisé par le prémontage sur la face supérieure du sol (10) des éléments encastrables supplémentaires suivants: ceintures de sécurité arrière, roue de secours, cric, outil de bord, triangle de signalisation, boîte à pansements.

5. Groupe de construction prémonté selon les revendications 1, 2, 3 ou 4 caractérisé par le prémontage sur la face inférieure du sol (10) des éléments encastrables supplémentaires suivants: pont arrière (19) avec amortisseurs (23), essieu avant (32) avec jambes élastiques (33), moteur et transmission (groupe moteur 31), radiateur (37) et tuyauterie, réservoir (26) et conduite (25) de carburant, échappement (27), conduites de frein (24), dispositifs de décontamination de gaz d'échappement (convertisseur, écrans thermiques en tôle), filtres de purification Diesel.

6. Groupe de construction prémonté selon une ou plusieurs des revendications précédentes caractérisé par le fait que toutes les lignes électriques, pour feux de freinage, lanternes arrière, phares de marche arrière, feux de position, etc. sont posés jusqu'à l'arrière du véhicule sur le sol de ce dernier.

7. Groupe de construction prémonté selon une ou plusieurs des revendications précédentes caractérisé par le fait que la console médiane entre les sièges avant est ainsi établie qu'elle se rattache directement au tableau de bord, ou à l'habitacle.

8. Groupe de construction prémonté selon une ou plusieurs des revendications précédentes caractérisé par le fait que des composants électroniques sont prémontés dans la zone latérale de paroi frontale, la zone d'appui avant des pieds, la zone des carters de roue (12–15), du châssis avant 11 ou du fond du coffre.

9. Groupe de construction prémonté selon une ou plusieurs des revendications précédentes caractérisé par le fait que le poids des sièges avant et arrière appuie directement, c'est-à-dire sans liaison intermédiaire, sur le châssis.

10. Groupe de construction prémonté selon une ou plusieurs des revendications précédentes caractérisé par le fait que la carrosserie (48) s'appuie dans le canal (50) fermé vers le bas et est supportée sans collage ni vissage par le sol (10).

11. Procédé de réalisation d'un groupe de construction prémonté selon une ou plusieurs des revendications précédentes caractérisé par les phases successives énumérées ci-dessous:

a) Montage (selon figure 2) en direction verticale du haut vers le bas (flèche 28), sur le sol (10) présentant sa face inférieure vers le haut, du réservoir (26) et des conduites (25) de réfrigérant, des conduites de frein (24) de l'échappement avec installations, de décontamination et purification ainsi que du pont arrière (19) avec amortisseurs (23), frein à main et raccordement prémonté au frein de roue arrière.

b) Rotation du sol (10) (y compris les éléments insérables (19–27) déjà montés) de 180° jusqu'à ce que sa face supérieure soit tournée vers le haut, ou sa face inférieure vers le bas.

c) Montage (selon la figure 3) en direction verticale du bas vers le haut (flèche 30), entre les deux parties (11) de châssis avant du sol (10), du groupe moteur (31) composé du moteur et de la transmission, qui forment avec l'essieu avant (32), y compris les jambes élastiques (33) et le radiateur (37), tuyauterie comprise, une unité de construction prémontée (29).

d) Montage (selon la figure 4) en direction verticale du haut vers le bas, sur la face supérieure du sol (10), du plancher (40) constituant un élément préformé et du siège arrière (43), y compris ses dossiers (44) et leurs ferrures de réglage.

e) Montage (selon la figure 5), à partir de chaque côté en direction horizontale (flèche 47) transversalement à l'axe longitudinal du véhicule, des deux sièges avant (44, 46), y compris pour chacun le dossier et la ferrure de réglage.

12. Utilisation d'un groupe de construction prémonté selon une ou plusieurs des revendications précédentes pour la réalisation d'un véhicule automobile, notamment d'une voiture de tourisme, caractérisée par le fait que, après contrôle complet de fonctionnement du groupe de construction prémonté, on monte ce dernier avec la carrosserie (48) en direction verticale, le flasque vertical de jonction (52) de cette dernière pénétrant en même temps dans le canal (50), empli de matière adhésive (51), du bord du sol (10) (figures 6–8).

13. Utilisation selon la revendication 12 caractérisée par le fait qu'aux angles du canal (50) on assemble en plus par vissage (56) le sol (10) au flasque vertical de jonction (52) de la carrosserie pénétrant dans la matière adhésive (51).

14. Utilisation selon la revendication 13 caractérisée par le fait qu'à l'intérieur du canal (50), aux emplacements d'assemblage par vissage (56) au flasque de jonction (52) de la carrosserie, des rondelles entretoises (57) en caoutchouc ou en un matériau techniquement équivalent sont disposées de part et d'autre du flasque de jonction de la carrosserie immergé dans la matière adhésive (51), chacune entre ce dernier et la paroi du canal, en sorte qu'il ne se produise aucun contact direct (métallique) entre ledit flasque de jonction (52) de la carrosserie et le canal (50).

**Claims**

1. Preassembled subassembly for the chassis of motor vehicles, in particular passenger cars, consisting of a floor (10) with preassembled fittings, wherein the floor (10) is constructed as a self-supporting component extending over the whole length and width of the vehicle or essentially over the whole length and width of the vehicle, and also includes the front frame (11), the boot floor (17) and the wheelhousings (12–15), characterised in that the floor (10) comprises at the edge a peripheral open-topped channel (50) which can be filled with adhesive (51) and which serves to receive a correspondingly peripheral vertical joint flange (52) of the body (48), in such a way that the floor (10) can be joined to the body (48) by gluing.

2. Preassembled subassembly according to claim 1, characterised in that the channel (50) also serves for self-centring of the body (48), for sealing of the interior of the vehicle, for insulation of the interior of the vehicle and for cutting off from driving noise.

3. Preassembled subassembly according to claim 1 or 2, with floor covering and seats as preassembled fittings, characterised in that the preassembled floor covering (40) extends over the whole length, i.e. from the front edge (at the dashboard or cockpit) to the rear end of the vehicle, i.e. including the boot floor (17), and the rear seats (43) including back rests (44) with or without arrangement of back rest adjusting means and with bearing, fastening and back rest adjusting components are preassembled on chassis (10) and wheelhousings (14, 15), like the front seats (45, 46).

4. Preassembled subassembly according to claim 1, 2 or 3, characterised by the following additional fittings preassembled on the upper side of the floor (10): rear seat belts, spare wheel, jack, vehicle tool, warning triangle, first aid box.

5. Preassembled subassembly according to claim 1, 2, 3 or 4, characterised by the following additional fittings preassembled on the underside of the floor (10): rear axle (19) with shock absorbers (23), front axle (32) with telescopic struts (33), engine and gearbox (drive unit 31), radiator (37) with hoses, fuel tank (26) with fuel pipes (25), exhaust system (27), brake pipes (24), exhaust gas detoxifying means (converter, heat shields), diesel cleaning filter.

6. Preassembled subassembly according to one or more of the preceding claims, characterised in that all electrical wiring for brake lights, rear lights, reversing lights, signalling lights and the like are laid on the floor as far as the rear of the vehicle.

7. Preassembled subassembly according to one or more of the preceding claims, characterised in that the central mounting pad between the front seats is constructed in such a way that it has a direct connection with the instrument panel or the cockpit.

8. Preassembled subassembly according to one or more of the preceding claims, characterised in that electronic components are preassembled in the region of the dashboard at the side, front foot rest area, wheelhousings (12–15), front frame (11) or boot floor.

9. Preassembled subassembly according to one or more of the preceding claims, characterised in that the weight of the front and rear seats is supported directly, i.e. without intermediate connection, on the chassis.

10. Preassembled subassembly according to one or more of the preceding claims, characterised in that the body (48) is supported in the channel (50) which is closed at the bottom, and carried by the floor (10) without gluing and bolting.

11. Method for the manufacture of a preassembled subassembly according to one or more of the preceding claims, characterised by the following steps to be performed successively:

a) Assembly of fuel tank (26) and fuel pipes (25), brake pipes (24), exhaust system with detoxifying and cleaning systems and rear axle (19) with shock absorbers (23) with hand brake and preassembled connection to the rear wheel brake, in a vertically downward direction (arrow 28) on the floor (10) with its underside facing upwards (Fig. 2).

b) Rotation of the floor (10) (including the already assembled fittings (19–27) through 180° until its upper side faces upwards and its underside faces downwards.

c) The drive unit (31) which consists of engine and gearbox and which, together with the front axle (32) including telescopic struts (33) and the radiator (37), including pipes, forms a preassembled unit (29), is assembled in a vertically upward direction (arrow 30) between the two front frame sections (11) of the floor (10) (Fig. 3).

d) Assembly of the floor covering (40) which forms a premoulded component and the rear seat (43) including back rests (44) with adjustment fittings, in a vertically downward direction on the upper side of the floor (10) (Fig. 4).

e) Assembly of the two front seats (44, 46), each including back rest and adjustment fitting, from the respective side in a horizontal direction (arrow 47) perpendicularly to the longitudinal axis of the vehicle (Fig. 5).

12. Use of a preassembled subassembly according to one or more of the preceding claims for the manufacture of a motor vehicle, in particular passenger car, characterised in that the preassembled subassembly, after complete performance testing thereof, is assembled to the body in a vertical direction, wherein the vertical joint flange (52) of the body enters the channel (50) filled with adhesive (51) at the edge of the floor (10) (Figs. 6–8).

13. Use according to claim 12, characterised in that the floor (10) at the corners of the channel (50) is additionally joined by bolting (56) to the vertical body joint flange (52) which enters the adhesive (51).

14. Use according to claim 13, characterised in that in the interior of the channel (50), at the points of bolting (56) to the body joint flange (52), are disposed shims (57) made of rubber or a technically equivalent material on both sides of the body joint flange (52) which extends into the adhesive (51), in each case between this flange (52) and the channel wall, in such a way that there is no direct (metal) contact of the body joint flange (52) with the channel (50).

FIG.1

FIG. 2

FIG.3

FIG. 4

FIG. 5

FIG.6

FIG.8

FIG.7